Europäisches Patentamt

European Patent Office

Office européen des brevets

(11) Veröffentlichungsnummer: **0 493 690 A1**

## EUROPÄISCHE PATENTANMELDUNG

(21) Anmeldenummer: **91120641.5**

(22) Anmeldetag: **30.11.91**

(51) Int. Cl.5: **B65B  51/22**, B65B 7/28, B29C 65/08

(30) Priorität: **04.01.91 DE 4100090**

(43) Veröffentlichungstag der Anmeldung:
**08.07.92 Patentblatt  92/28**

(84) Benannte Vertragsstaaten:
**DE ES FR GB NL**

(71) Anmelder: **4P Nicolaus Kempten GmbH**
**Ulmer Strasse 18**
**W-8960 Kempten(DE)**
Anmelder: **WILHELM FISCHER**
**SPEZIALMASCHINENFABRIK GMBH**
**Weidacher Strasse 1-3**
**W-8968 Durach(DE)**

(72) Erfinder: **Fischer, Wilhelm**
**Weidacher Strasse 1-3**
**W-8968 Durach(DE)**

(74) Vertreter: **Hutzelmann, Gerhard**
**Duracher Strasse 22**
**W-8960 Kempten(DE)**

(54) Schweisseinrichtung zum Verschweissen eines Kunststoffdeckels.

(57) Schweißeinrichtung zum Verschweißen des Randes eines muldenförmigen Kunststoffdeckels mit dem Rand eines dosenförmigen Behälters vorzugsweise aus Karton od.dgl., mit einem Spannwerkzeug zum Angreifen an der Außenseite des Deckels bzw. der Außenseite des Behälters und einem Innenwerkzeug zum Einsetzen in die Mulde des Deckels, wobei das Innenwerkzeug als Ultraschall-Sonotrode(6) ausgebildet ist und das Spannwerkzeug einen axial verschiebbar angeordneten und konisch ausgebildeten Spannring(5) aufweist.

Fig.  1

Die Erfindung bezieht sich auf eine Schweißeinrichtung zum Verschweißen des Randes eines muldenförmigen Kunststoffdeckels mit dem Rand eines dosenförmigen Behälters vorzugsweise aus Karton od.dgl., mit einem Spannwerkzeug zum Angreifen an der Außenseite des Deckels bzw. der Außenseite des Behälters und einem Innenwerkzeug zum Einsetzen in die Mulde des Deckels.

Aus der DE-PS 37 17 510 ist eine derartige Schweißeinrichtung bekannt, die sich beim Einschweißen von ovalen Deckein hervorragend bewährt hat. Für das Versiegeln von beispielsweise runden Behältern und Deckein ist diese bekannte Einrichtung jedoch zu aufwendig.

Der Erfindung liegt daher die Aufgabe zugrunde, eine Schweißeinrichtung der genannten Art zu schaffen, die verhältnismäßig einfach aufgebaut ist, trotzdem aber zuverlässig und rationell arbeitet.

Diese Aufgabe wird erfindungsgemäß dadurch gelöst, daß das Innenwerkzeug als Ultraschall-Sonotrode ausgebildet ist und das Spannwerkzeug einen axial verschiebbar angeordneten und konisch ausgebildeten Spannring aufweist.

Mit Hilfe dieses Spannringes wird die Schweißeinrichtung mit dem eingelegten, zu verschweißenden Behälter auf einfachste Weise zusammengepreßt und dabei der notwendige Schweißdruck erzeugt.

Dabei ist es erfindungsgemäß besonders vorteilhaft, wenn das Spannwerkzeug einen Innenring aufweist, der wenigstens in seinem dem Spannen dienenden Endabschnitt aus mehreren über den Umfang verteilten Segmenten besteht, die einen geringen Abstand voneinander aufweisen.

Diese Segmente lassen sich besonders einfach zusammendrücken und erzeugen dabei den notwendigen Druck auf die zu verschweißenden Teile.

Erfindungsgemäß ist dabei vorgesehen, daß die Abstände zwischen den Segmenten des Innenringes so groß gewählt sind, daß auch im Endstadium des Zusammenpressens noch ein geringer Abstand vorhanden ist.

Damit ist erreicht, daß der Schweißdruck völlig unbehindert in jeder beliebigen Größe von außen aufgebracht werden kann.

Eine weitere vorteilhafte Ausgestaltung der Erfindung liegt darin, daß das als Sonotrode ausgebildete Innenwerkzeug in axialer Richtung verstellbar angeordnet ist.

Damit ist es möglich, die Schweißeinrichtung auch bei nicht exakter Maßhaltigkeit der Sonotrode auf optimale Siegelbedingungen einzustellen.

Als sehr vorteilhaft hat es sich auch erwiesen, wenn erfindungsgemäß der Spannring in wenigstens zwei Stufen gegen das äußere Spannwerkzeug verfahrbar ist, wodurch sich ein unterschiedlicher Anpreßdruck einstellt.

Damit ist ermöglicht, die miteinander zu versiegelnden Teile zuerst mit einem niedrigeren Anpreßdruck von beispielsweise zwei bar aneinander zu pressen, dann den Anpreßdruck auf beispielsweise fünf bar zu steigern und erst bei Erreichen des höchsten vorgesehenen Anpreßdruckes die Ultraschallquelle einzuschalten.

Insbesondere zum Einschweißen eines mit einer sternförmig ausgebildeten Öffnung versehen Deckels hat es sich sehr bewährt, wenn gemäß der Erfindung im Bereich der sternförmigen Öffnung ein Dämpfungsglied im Innern des Innenwerkzeuges angeordnet ist, das sich während des Schweißvorganges an die die sternförmige Öffnung umgebenden Materialbereiche des Deckels anlegt. Damit wird ein Fibrieren dieser Materialabschnitte und damit deren Beschädigung vermieden.

In der Zeichnung ist die Erfindung anhand eines Ausführungsbeispiels veranschaulicht. Dabei zeigen:

Fig.1     eine Frontansicht der Schweißeinrichtung und

Fig.2     eine Seitenansicht der Schweißeinrichtung.

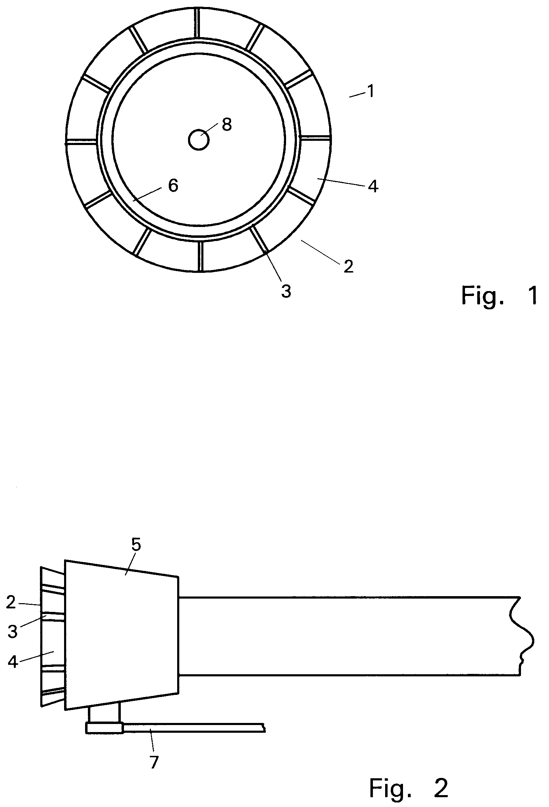

Mit 1 ist in Fig.1 eine Schweißeinrichtung bezeichnet, die zum Verschweißen des Randes eines nicht dargestellten muldenförmigen Kunststoffdekkels mit dem Rand eines dosenförmigen Behälters dient. Die Schweißeinrichtung 1 weist ein mit einem Innenring 2 versehenes Spannwerkzeug zum Angreifen an der Außenseite des Deckels auf. Der Innenring 2 ist durch Einschnitte 3 in einzelne Ringsegmente 4 unterteilt, an denen ein axial verschiebbarer Spannring 5 angreift. Innerhalb des Innenringes 2 des Spannwerkzeuges ist eine ebenfalls ringförmig ausgebildete Ultraschall-Sonotrode 6 angeordnet, zu welcher der Innenring als Gegenwerkzeug dient. Der Spannring 5 ist auf seiner Innenseite und der Innenring auf seiner Außenseite konisch ausgebildet, wodurch beim Axialverschieben des Spannringes der Innenring 2 zusammengedrückt wird. Da zwischen dem Innenring 2 und der Ultraschall-Sontrode 6 die miteinander zu verschweißenden Teile eingespannt werden, bewirkt das Axialverschieben des Spannringes gleichzeitig das Zusammenpressen dieser Teile. Zum Axialverschieben greift am Spannring 5 eine Schubstange 7 an, die in nicht dargestellter Weise mit einem Pneumatikzylinder verbunden ist. Im Zentrum der Schweißeinrichtung 1 ist ein Dämpfungsglied 8 angeordnet, gegen das sich der zu verschweißende Deckel legt und dabei während der Ultraschall-Beaufschlagung vor Vibrationen geschützt wird. Zum Ausgleichen von Fertigungstoleranzen ist die Ultraschallsonotrode längsverschiebbar gelagert, so daß beim Einbau fertigungstechnisch nicht vermeidbare Ungenauigkeiten ausgeglichen werden können.

Nach dem Einsetzen der miteinander zu verschweißenden Teile in die Schweißeinrichtung wird der Spannring 5 soweit verfahren, daß sich ein Anpreßdruck von etwa 2 bar ergibt. Sodann wird durch weitergehendes Zusammenpreßen dieser Druck auf etwa 5 bar erhöht und beim Erreichen des eingestellten Solldrucks die Ultraschallquelle eingeschaltet.

**Patentansprüche**

1. Schweißeinrichtung zum Verschweißen des Randes eines muldenförmigen Kunststoffdeckels mit dem Rand eines dosenförmigen Behälters vorzugsweise aus Karton od.dgl., mit einem Spannwerkzeug zum Angreifen an der Außenseite des Deckels bzw. der Außenseite des Behälters und einem Innenwerkzeug zum Einsetzen in die Mulde des Deckels, **dadurch gekennzeichnet**, daß das Innenwerkzeug als Ultraschall-Sonotrode(6) ausgebildet ist und das Spannwerkzeug einen axial verschiebbar angeordneten und konisch ausgebildeten Spannring(5) aufweist.

2. Schweißeinrichtung nach Anspruch 1, **dadurch gekennzeichnet**, daß das Spannwerkzeug einen Innenring(2) aufweist, der wenigstens in seinem dem Spannen dienenden Endabschnitt aus mehreren über den Umfang verteilten Segmenten(4) besteht, die einen geringen Abstand voneinander aufweisen.

3. Schweißeinrichtung nach Anspruch 2, **dadurch gekennzeichnet**, daß die Abstände zwischen den Segmenten(4) des Innenringes(2) so groß gewählt sind, daß auch im Endstadium des Zusammenpressens noch ein geringer Abstand vorhanden ist.

4. Schweißeinrichtung nach einem der vorhergehenden Ansprüche, **dadurch gekennzeichnet**, daß das als Sonotrode(6) ausgebildete Innenwerkzeug in axialer Richtung verstellbar angeordnet ist.

5. Schweißeinrichtung nach einem der vorhergehenden Ansprüche, **dadurch gekennzeichnet**, daß der Spannring(5) in wenigstens zwei Stufen gegen das äußere Spannwerkzeug verfahrbar ist, wodurch sich ein unterschiedlicher Anpreßdruck einstellt.

6. Schweißeinrichtung nach einem der vorhergehenden Ansprüche, insbesondere zum Einschweißen eines mit einer sternförmig ausgebildeten Öffnung versehenen Deckels, **dadurch gekennzeichnet**, daß im Bereich der sternförmigen Öffnung ein Dämpfungsglied(8) im Innern des Innenwerkzeuges angeordnet ist, das sich während des Schweißvorganges an die die sternförmige Öffnung umgebenden Materialbereiche des Deckels anlegt.

Fig. 1

Fig. 2

EUROPÄISCHER RECHERCHENBERICHT

Nummer der Anmeldung

EP 91 12 0641

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 074 343 (ESSELTE PAC)<br>* Seite 6, Zeile 4 - Seite 7, Zeile 31; Abbildungen *<br>--- | 1,4,5 | B65B51/22<br>B65B7/28<br>B29C65/08 |
| A | FR-A-2 118 038 (KAPSCH & SOHNE)<br>* Seite 6, Zeile 5 - Seite 8, Zeile 23; Abbildungen *<br>--- | 1,4 | |
| D,A | EP-A-0 292 883 (N. KEMPTEN)<br>* Spalte 3, Zeile 34 - Spalte 4, Zeile 58; Abbildungen *<br>--- | 1,6 | |
| A | WO-A-8 404 507 (ESSELTE PAC)<br>--- | | |
| A | US-A-4 187 768 (SHOICHI SUZUKI)<br>----- | | |
| | | | **RECHERCHIERTE SACHGEBIETE (Int. Cl.5 )**<br><br>B65B<br>B29C<br>B31B |

Der vorliegende Recherchenbericht wurde für alle Patentansprüche erstellt

| Recherchenort | Abschlußdatum der Recherche | Prüfer |
|---|---|---|
| DEN HAAG | 27 APRIL 1992 | JAGUSIAK A.H.G. |